Europäisches Patentamt

European Patent Office

Office européen des brevets

(19)

(11) Numéro de publication: **0 258 112**
**B1**

(12) **FASCICULE DE BREVET EUROPEEN**

(45) Date de publication du fascicule du brevet:
**04.10.89**

(21) Numéro de dépôt: **87401803.9**

(22) Date de dépôt: **03.08.87**

(51) Int. Cl.⁴: **F16F 15/12**, F16D 13/71,
F16D 3/66

(54) Dispositif amortisseur de torsion pour système de transmission de couple.

(30) Priorité: 21.08.86 FR 8611935
23.10.86 FR 8614727

(43) Date de publication de la demande:
**02.03.88 Bulletin 88/9**

(45) Mention de la délivrance du brevet:
**04.10.89 Bulletin 89/40**

(84) Etats contractants désignés:
**DE ES GB IT**

(56) Documents cités:
**EP-A- 0 170 950**
**FR-A- 2 532 705**
**FR-A- 2 571 461**
**FR-A- 2 575 532**
**GB-A- 2 089 472**

(73) Titulaire: **VALEO, 64 Avenue de la Grande Armée,
F-75017 Paris(FR)**

(72) Inventeur: **Chasseguet, Gustave, 2 Avenue du Tourne
Vent, F-95150 Taverny(FR)**
Inventeur: **Willyard, John, 35810 W.13 Mile Rd.,
Farmington Hills Michigan 48018(US)**
Inventeur: **Després, Dominique, 24 rue du Général
Roguet, F-92110 Clichy(FR)**

(74) Mandataire: **CABINET BONNET-THIRION, 95 Boulevard
Beaumarchais, F-75003 Paris(FR)**

ACTORUM AG

## Description

"L'invention se rapporte à un dispositif amortisseur de torsion pour système de transmission de couple, tel qu'un embrayage; elle concerne plus particulièrement la réduction du bruit engendré dans certaines circonstances, notamment lorsque le système entre momentanément en résonance.

Un système de transmission de couple tel qu'un embrayage à friction, destiné à être intercalé entre le vilebrequin du moteur et l'arbre d'entrée de la boîte de vitesses, dans un véhicule automobile, comporte très généralement un dispositif amortisseur de torsion susceptible d'absorber les variations de ce couple, pour éviter que des vibrations et en particulier des vibrations sonores ne prennent naissance tout au long de la chaîne cinématique dans laquelle ledit dispositif amortisseur de torsion est inséré. Un tel dispositif amortisseur est souvent combiné au disque de friction de l'embrayage ou au volant d'inertie entraîné par le vilebrequin du moteur et faisant également fonction de plateau de réaction pour l'embrayage.

Ainsi, le brevet français N° 2571461 décrit un tel dispositif amortisseur combiné à un volant d'inertie. Le volant comprend deux parties coaxiales entre lesquelles sont agencés des ressorts hélicoïdaux disposés circonférentiellement. Plus précisément, chaque ressort est maintenu entre des socles montés articulés entre deux flasques (autrement appelés rondelles de guidage) d'une première partie, en l'occurrence la partie menante, tandis que ces mêmes socles sont susceptibles d'être sollicités circonférentiellement avec possibilité d'articulation, par des voiles annulaires en tôle solidaires de la partie menée, la variation de compression des ressorts assurant l'absorption des variations de couple et un certain filtrage des vibrations de toutes sortes.

Cet agencement donne de bons résultats, principalement en raison de la présence des socles articulés qui permettent aux ressorts de fonctionner dans de meilleures conditions en évitant qu'ils ne soient soumis à des déformations radiales excessives, vers l'intérieur ou l'extérieur. De plus, un tel système est conçu de telle sorte que la pointe de résonance se situe "en-dessous" du régime de ralenti du moteur. Cependant, on a constaté que lorsque le moteur s'arrête, c'est-à-dire précisément lorsque le système se retrouve momentanément dans ses conditions de résonance, des vibrations sonores se produisent parfois. Compte tenu du grand nombre de pièces susceptibles de provoquer un tel bruit dans la chaîne cinématique en général et dans l'embrayage en particulier, il était difficile de mettre en cause plus particulièrement tel ou tel élément ou groupe d'éléments. Parmi ceux-ci, les sièges semblaient a priori les moins susceptibles de provoquer ce bruit, du fait qu'ils sont en matière plastique moulée, matériau généralement considéré comme peu "sonore". L'invention a principalement consisté à vaincre un tel préjugé en mettant en évidence que dans les conditions transitoires définies ci-dessus, lesdits socles sont violemment sollicités circonférentiellement au point que lorsqu'ils sont décollés périodiquement de leurs zones d'appui rotatif, le bruit provient à la fois des chocs de l'une des parties coaxiales sur les socles lorsque ceux-ci sont écartés de leurs appuis et des chocs desdits socles sur l'autre partie, lorsqu'ils reviennent en place. L'invention permet d'éliminer de tels bruits.

Plus précisément, l'invention concerne donc un dispositif amortisseur de torsion, notamment dans un embrayage, du type comportant deux parties coaxiales montées avec possibilité de rotation limitée l'une par rapport à l'autre, une première partie comportant deux flasques annulaires sensiblement parallèles et une seconde partie comportant au moins un voile intercalé axialement entre les deux flasques et des ressorts disposés sensiblement circonférentiellement entre des socles montés sur l'une des parties, chaque socle comportant des premiers moyens d'engagement coopérant avec des moyens d'engagement complémentaires de l'une des parties pour définir entre eux au moins une première zone d'appui rotatif et des seconds moyens d'engagement coopérant avec des moyens d'engagement complémentaires de l'autre partie pour définir entre eux au moins une seconde zone d'appui rotatif, caractérisé en ce qu'au moins l'une desdites parties coaxiales et/ou lesdits socles sont pourvus ou forment des éléments en matériau amortisseur, par exemple en matériau élastomère, caoutchouc ou analogue, interposés au moins au voisinage des moyens d'engagement précités, pour amortir les chocs entre lesdits socles et lesdites parties coaxiales.

Bien que la structure qui vient d'être décrite s'applique tout particulièrement à un dispositif amortisseur de torsion formant en même temps volant d'inertie, le même agencement peut être adapté dans un autre élément de l'embrayage, à savoir le disque de friction.

De nombreux modes de réalisation sont possibles. Ainsi, les socles peuvent être recouverts d'une couche de matériau élastomère. Il est cependant préférable de faire en sorte que lesdites parties coaxiales et lesdits socles qui définissent entre eux les zones d'appui rotatif précité ne soient pas recouverts de matériau absorbant, pour éviter de perturber la cinématique de pivotement des socles. C'est pourquoi, l'invention vise tout particulièrement des modes de réalisation tels que les éléments amortisseurs précités soient placés à l'écart des zones d'appui rotatif définies ci-dessus.

Ainsi, les chocs sont amortis par le fait que chaque socle et les parties coaxiales entrent en contact d'abord par l'intermédiaire du matériau amortisseur, lequel est conformé et placé de telle sorte qu'il puisse s'effacer au fur et à mesure que les pièces se rapprochent, la prise de contact au niveau desdites zones d'appui rotatif non recouvertes se faisant moins violemment, sans bruit gênant. Cependant, le cas d'un recouvrement total des pièces en question (et notamment des socles) par du matériau amortisseur, reste dans le cadre de l'invention, ne serait-ce que parce que ledit matériau amortisseur pourrait être rapidement et naturellement éliminé sur lesdites zones d'appui rotatif, au début de la durée de vie de l'amortisseur de torsion.

Parmi toutes les solutions couvertes par la définition qui précède, il en est une notamment où des éléments en matériau amortisseur précités sont portés par les flasques et notamment rapportés sur ces flasques, latéralement, de façon à coopérer avec les faces arrière desdits socles. Plus précisément, dans ce cas, les flasques en question comportent des fenêtres allongées, agencées circonférentiellement, deux fenêtres en regard pratiquées respectivement dans les deux flasques abritant un ressort précité et comportant sur leurs bords sensiblement radiaux des encoches arrondies recevant des tourillons définis latéralement sur le socle correspondant. Dans cet agencement, les éléments de matériau amortisseur sont des plaques fixées sur les faces internes des flasques de façon à déborder circonférentiellement par rapport aux fonds desdites encoches arrondies.

Cet agencement donne satisfaction quant à la suppression du bruit, notamment lorsque le moteur s'arrête et que le système se retrouve momentanément dans ses conditions de résonance. Cependant, chaque fois qu'un socle se trouve momentanément dégagé des flasques sur lesquels il s'articule normalement, il se trouve un court intervalle de temps pendant lequel ledit socle n'est plus sollicité que par la force de précontrainte du ressort qui lui est associé. Ceci se produit chaque fois que le voile est dégagé du socle. C'est donc au ressort que revient le rôle de commencer à déformer les éléments en matériau amortisseur fixés le long des flasques, avant que son action soit renforcée par celle du ou des voiles entrant en contact avec le socle de l'autre extrémité du même ressort. Or, pendant que s'effectue ce mouvement, les socles et les ressorts sont sollicités radialement vers l'extérieur par la force centrifuge. Si la sollicitation circonférentielle due à la seule précontrainte du ressort est trop faible pour provoquer une déformation suffisante de l'élément en matériau amortisseur, il peut se produire une déviation radiale de la trajectoire du socle et par conséquent, à la longue, une usure de certaines parties des tourillons ainsi que de la paroi de la creusure qui débouche au centre de la face arrière du socle et dans laquelle s'engagent le ou les voiles précités. Par ailleurs, comme il n'est pas possible de réduire la "raideur" du matériau amortisseur en deçà de certaines limites sans compromettre l'efficacité du système contre le bruit, de tels phénomènes d'usure localisée peuvent créer des jeux de fonctionnement susceptibles de nuire, à la longue, à la fiabilité de l'amortisseur de torsion.

L'invention permet en outre de résoudre cet inconvénient.

Dans cet esprit, l'invention concerne aussi un dispositif amortisseur de torsion du type décrit ci-dessus, dans lequel deux flasques comportent des fenêtres allongées circonférentiellement, deux fenêtres en regard pratiquées respectivement dans les deux flasques abritant un ressort monté avec précontrainte initiale entre deux socles, chaque fenêtre comportant sur ses bords sensiblement radiaux des encoches arrondies recevant des tourillons définis sur des socles correspondants, caractérisé en ce que les éléments en matériau amortisseur et les zones de la face arrière de chaque socle qui sont susceptibles d'entrer mutuellement en contact sont munis de découpes et reliefs coopérant pour stabiliser radialement ledit socle par rapport auxdits flasques, lors d'un déplacement relatif circonférentiel entre ceux-ci.

L'invention sera mieux comprise et d'autres avantages de celle-ci apparaîtront plus clairement à lumière de la description qui va suivre d'un dispositif amortisseur de torsion conforme à son principe, donnée uniquement à titre d'exemple et faite en référence aux dessins annexés dans lesquels:

- la figure 1 est une vue générale d'un dispositif amortisseur de torsion formant volant d'inertie, incorporant les perfectionnements de l'invention et représenté suivant la coupe I-I de la figure 2;
- la figure 2 est une vue partielle et avec arrachement du même dispositif, vu suivant la flèche II de la figure 1;
- la figure 3 est une vue de détail à plus grande échelle montrant l'un des éléments en matériau amortisseur de l'invention associé à un flasque ou rondelle de guidage;
- la figure 4 est une vue de détail à plus grande échelle d'un autre élément en matériau amortisseur associé à des voiles de l'une des parties coaxiales précitées;
- la figure 5 est une vue de détail en coupe diamétrale de ces voiles, illustrant leur assemblage;
- la figure 6 est une vue de côté de l'un des socles du dispositif, pourvu d'éléments en matériau amortisseur conforme à l'invention; et
- la figure 7 est une vue selon la flèche VII de la figure 6.
- la figure 8 est une vue générale d'un dispositif amortisseur de torsion formant volant d'inertie, incorporant le dernier perfectionnement cité et représenté selon la coupe VIII-VIII de la figure 9;
- la figure 9 est une vue partielle et avec arrachement du même dispositif, vu suivant la flèche IX de la figure 8;
- la figure 10 est une vue de détail à plus grande échelle d'un élément en matériau amortisseur;
- la figure 11 est une vue de côté de l'un des socles du dispositif; et
- la figure 12 est une vue selon la flèche XII de la figure 11.

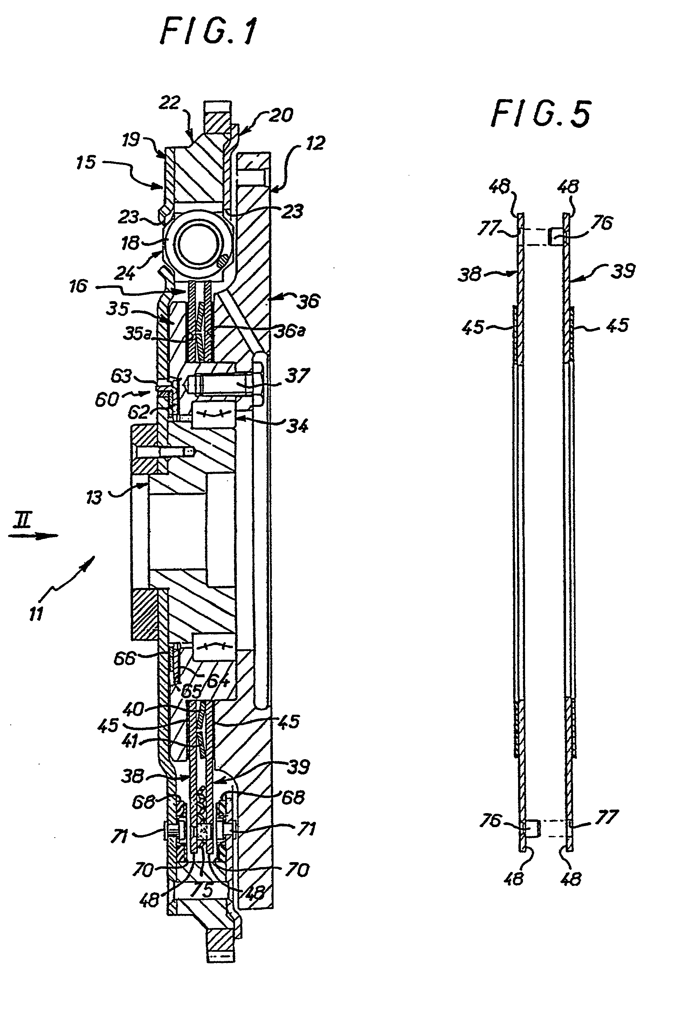

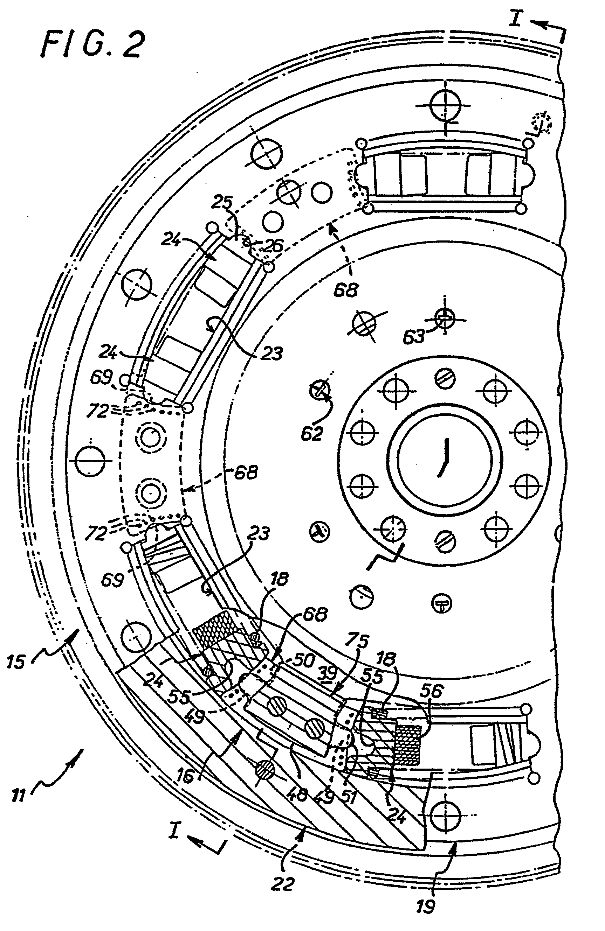

En se reportant aux figures 1 à 7, on a représenté plus particulièrement un volant d'inertie formant amortisseur de torsion 11, pour transmission de véhicule automobile, ce volant comportant une surface annulaire de contact 12 propre à lui faire jouer le rôle supplémentaire de plateau de réaction dans un embrayage à friction. A ce titre, le volant 11 est destiné à être fixé par son moyeu 13 au vilebrequin du moteur à combustion interne du véhicule automobile. Il comporte deux parties coaxiales 15 et 16, qui seront respectivement appelées ci-dessous première et seconde parties, montées avec possibilité de rotation limitée l'une par rapport à l'autre à l'encontre, notamment, de la force exercée circonférentiellement entre elles par des ressorts hélicoïdaux 18. La première partie 15 ou partie menante, dont fait partie le moyeu 13, comporte deux flasques annulaires 19, 20, métalliques, communément appelés "rondelles de guidage". Le flasque 19 est fixé au moyeu 13. Le flasque 20, parallèle au flasque 19 est fixé extérieurement à celui-ci avec interposition d'une entretoise annulaire massive 22 portant la couronne de démarrage. Ces flasques comportent classiquement des fenêtres 23 allongées, s'étendant circonférentiellement. Chaque fenêtre d'un flasque est en regard d'une fenêtre symétrique de l'autre flasque de façon à définir des logements propres à abriter les ressorts 18. Chaque ressort 18 est monté dans un tel logement par l'intermédiaire de deux socles d'extrémité 24. Chaque socle 24 comporte des premiers moyens d'engagement coopérant avec des moyens d'engagement complémentaires des flasques 19 et 20, pour définir entre eux au moins une première zone d'appui rotatif. Dans l'exemple décrit, chaque socle comporte deux tourillons latéraux 25 admettant un axe commun parallèle à l'axe de rotation du volant amortisseur tandis que les fenêtres 23 comportent, sur leurs bords sensiblement radiaux, des encoches arrondies 26 recevant les tourillons 25 du socle correspondant. La coopération du tourillon 25 et des encoches 26 définit donc, pour chaque socle, deux dites premières zones d'appui rotatif, latérales, comme indiqué plus haut. En pratique également, le centre de chaque extrémité du ressort 18 est positionné plus près de l'axe de rotation que le centre de rotation de la partie convexe 25 formant tourillon.

La seconde partie 16 est montée en rotation sur le moyeu 13 par un roulement à billes 34 et se compose d'une pièce annulaire 35, formant une sorte de moyeu et d'un plateau 36, fixé à la pièce annulaire 35 par des vis 37. Ce plateau constitue plus particulièrement le plateau de réaction de l'embrayage puisque sa face radiale externe forme la surface annulaire de contact 12 sur laquelle vient s'appliquer la friction d'embrayage (non représentée).

D'autre part, la pièce annulaire 35 et le plateau 36 comportent des portées annulaires radiales respectives, 35a, 36a parallèles tandis que deux voiles parallèles 38, 39, en tôle découpée, sont engagés dans l'espace défini par ces deux portées annulaires et repoussés axialement vers celles-ci, respectivement, par des moyens élastiques à action axiale, ici en l'occurrence deux rondelles Belleville 40, 41. Ici, la portée 35a est formée à la faveur d'une bride, s'étendant radialement en direction de l'entretoise 22, que possède la pièce 35 qui, par ailleurs, centre les voiles 38, 39. Chaque voile porte une garniture de friction annulaire 45 par laquelle il est en contact frottant avec la portée annulaire radiale correspondante. Le voiles intercalés axialement entre les deux flasques 19, 20 sont susceptibles de coopérer avec les socles 24 des ressorts (d'une façon qui sera décrite plus en détail ci-dessous) et l'agencement qui vient d'être décrit constitue un limiteur de couple autorisant un glissement rotatif entre lesdites première et seconde parties coaxiales, lorsque le couple transmis dépasse une valeur prédéterminée. Chaque voile 38, 39 comporte une partie annulaire plate portant les garnitures 45, prolongée vers l'extérieur par des bras radiaux 48 (autant que de ressorts) assujettis à se déplacer circonférentiellement entre les ressorts. Les socles comportent donc des seconds moyens d'engagement coopérant avec des moyens d'engagement complémentaires de cette seconde partie, pour définir entre eux au moins une seconde zone d'appui rotatif. Pour ce faire, chaque bras 48 est muni de deux doigts 49 opposés, s'étendant sensiblement suivant une direction circonférentielle et faisant respectivement saillie des deux bords sensiblement radiaux 50 dudit bras, lesquels comportent chacun deux portions inclinées l'une par rapport à l'autre de part et d'autre du doigt 49 correspondant. Chaque doigt 49 comporte une extrémité arrondie 51 susceptible d'entrer en contact pivotant avec le fond arrondi d'une creusure 55 du socle correspondant, ouvrant entre les deux tourillons précités. La coopération des deux extrémités 51 de deux doigts parallèles appartenant respectivement aux deux voiles, avec le fond arrondi de la creusure 55 d'un socle correspondant définit donc deux dites secondes zones d'appui rotatif, comme indiqué plus haut. Les socles sont en matière plastique moulée mais portent des blocs de matériau élastomère 56 servant de butées élastiques en cas de surcouples aboutissant à une compression excessive des ressorts.

Bien entendu, la largeur de la creusure 55 est déterminée en fonction de l'écartement axial entre les voiles 38, 39 et compte tenu de l'usure des garnitures 54. Plus précisément, chaque socle 24 présente deux facettes latérales planes 78 pour coopération avec les flasques 19, 20. Par commodité, ces facettes latérales 78 seront appelées facettes de butée des flasques. En pratique, les tourillons 25 comportent chacun une surface cylindrique venue de moulage et raccordée à la facette 78 correspondante. Chaque socle 24 présente également des facettes transversales 80 pour coopération avec les voiles 38, 39, par commodité ces facettes 80 seront appelées facettes de butée des voiles 38, 39. En pratique, comme visible sur les figures, la creusure 55 s'ouvre sensiblement au milieu de la face arrière du socle 24, de sorte que ces facettes de butée des voiles sont définies de part et d'autre de ladite creusure 55. On notera que ces facettes 80 sont inclinées l'une par rapport à l'autre pour coopération avec les bords 50. En pratique, c'est la partie haute des voiles 38, 39 qui touche en premier l'une desdites facettes 80 pour débloquer le socle en service lorsque celui-ci occupe une position centrifugée. Entre lesdites facettes 80 d'une part et les facettes 79 et les tourillons 25 d'autre part, sont définis, sur la face arrière du socle 24, des talons 82 et, dans l'exemple de réalisation, la partie apicale des tourillons est à niveau avec la face desdits talons, l'écartement entre les deux talons correspondant à la largeur de la creusure. Comme visible sur les figures, chaque facette latérale 78 est raccordée à un talon 82 par une face perpendiculaire de guidage propre à coopérer avec la face interne du flasque 19, 20 concerné.

Comme le montrent les dessins, les ressorts n'interviennent pas dès le début du débattement angulaire entre les deux parties coaxiales, puisque les bras radiaux doivent effectuer une certaine course angulaire avant que certains de leurs doigts ne s'engagent dans les creusures des socles correspondants. Avant l'engagement desdits doigts au fond desdits socles, des moyens de frottement 60 (intervenant quant à eux dès le début du débattement angulaire entre les deux parties coaxiales) sont prévus entre lesdites parties coaxiales. Ces moyens de frottement se composent d'une rondelle de frottement 62 et d'une rondelle Belleville 66 formant ressort. La rondelle de frottement 62 est immobilisée en rotation par rapport à la première partie 15 par des pattes axiales 63 engagées dans des trous du flasque 19. Elle porte un garniture de friction 64 appliquée axialement contre un épaulement 65 de la pièce annulaire 35 de la seconde partie 16. La rondelle de frottement est sollicitée vers ledit épaulement par la rondelle Belleville 66 prenant appui entre celle-ci et le flasque 19.

Tout l'agencement qui vient d'être décrit jusqu'à présent est connu et a été décrit, par exemple, dans le brevet français No 2571461.

Selon l'invention, et pour les raisons évoquées plus haut, au moins l'une desdites parties coaxiales et/ou lesdits socles sont pourvus ou forment des éléments en matériau amortisseur, par exemple en matériau élastomère, caoutchouc ou analogue, interposés au moins au voisinage des moyens d'engagement précités, pour amortir les chocs entre lesdits socles et lesdites parties coaxiales. Ces éléments amortisseurs sont de préférence placés à l'écart des zones d'appui rotatif définies ci-dessus.

Ainsi, les figures 1 à 5 montrent un dispositif amortisseur dans lequel les éléments en matériau amortisseur sont montés sur les flasques 19, 20 et entre les voiles 38, 39, les socles n'étant pas alors nécessairement modifiés.

Pour ce qui concerne les flasques 19, 20, des plaques de matériau amortisseur 68, ici en matériau élastomère, sont fixées sur les faces internes de ceux-ci en regard l'une de l'autre; elles sont disposées de façon à déborder circonférentiellement en 69 par rapport aux fonds des encoches arrondies 26 en étant décalées axialement par rapport à celles-ci. Par commodité, on prévoit une même plaque 68 pour les bords sensiblement radiaux de deux fenêtres 23 adjacentes d'un même flasque. Ainsi, chaque plaque 68 s'étend entre deux fenêtres adjacentes d'un même flasque et est fixée à celui-ci par l'intermédiaire d'une contreplaque métallique 70 elle-même en retrait par rapport aux bords de la plaque de matériau amortisseur 68 qui sont voisins desdites encoches arrondies 26 de façon à ce que lesdites contreplaques métalliques 70 ne viennent pas en contact avec les socles 24. La comtreplaque 70, maintenant la plaque 68, est fixée au flasque correspondant par deux rivets 71. Ceux-ci sont, selon l'exemple, situés dans des logements emboutis de ladite contreplaque. En pratique, l'épaisseur de la plaque est fonction de la largeur existante entre chaque flasque 19, 20 et les voiles 38, 39, en sorte que ladite plaque est propre à coopérer avec un talon 82 du socle 24. Plus précisément, chaque plaque 68 présente un débordement circonférentiel en 69 déterminé en sorte que ledit débordement vienne en contact du talon 82 avant que le tourillon 25 coopère avec le fond de l'encoche 26. Selon l'exemple, ce débordement 69 est conformé au talon 82 du socle 24. Pour faciliter l'effacement du matériau élastomère et permettre d'une part d'absorber les variations dues au pivotement du socle 24 sous charge et d'autre part que les tourillons 25 arrivent effectivement en contact avec les bords des encoches 26, les plaques des matériaux amortisseurs 68 peuvent être percées de trous 72 s'étendant en retrait des bords sensiblement radiaux de celles-ci et notamment au voisinage des encoches 26 correspondantes du flasque 19 ou 20 auquel elles sont fixées.

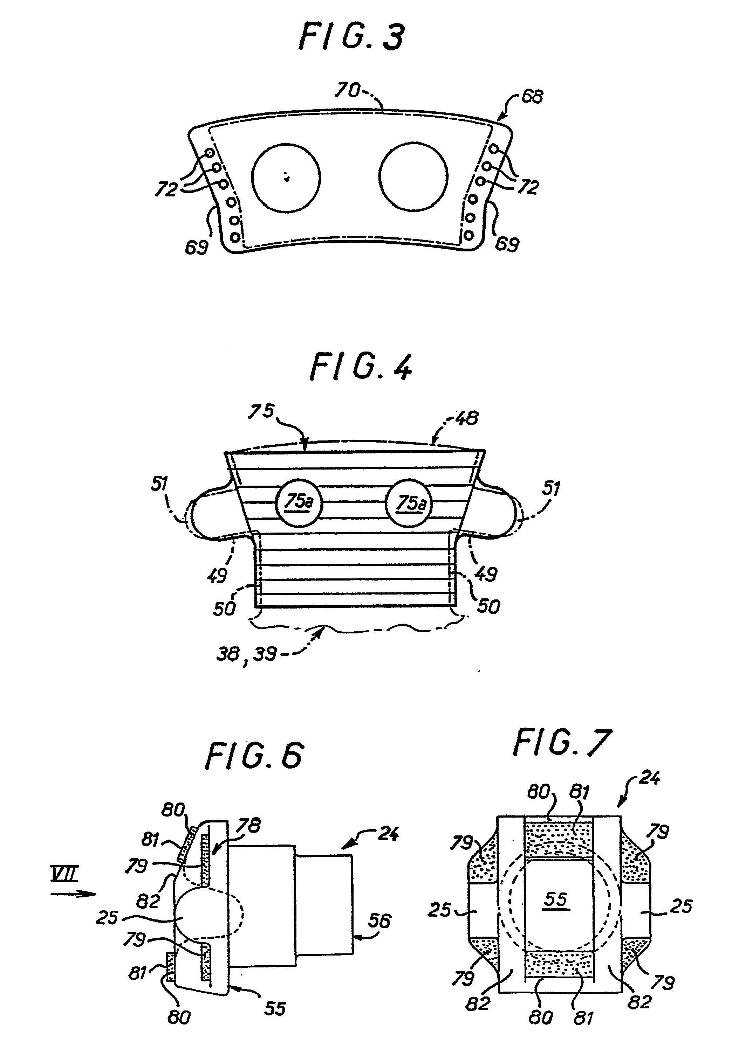

Pour ce qui concerne les voiles 38, 39, on prévoit une pièce de matériau amortisseur 75, relativement plate mais ondulée dans sa partie centrale, dans le sens axial. Cette pièce est rapportée le long de chaque bras radial 48 et plus particulièrement ici intercalée entre deux tels bras en regard l'un de l'autre et appartenant aux deux voiles. Comme le montre la figure 4, la pièce 75 a une forme correspondant sensiblement à celle d'un bras radial 48 mais elle est conformée pour déborder par rapport aux bords des doigts 49, à l'exception de leurs extrémités arrondies et/ou par rapport aux bords sensiblement radiaux 50 desdits bras 48, de part et d'autre des doigts qui font saillie de ces bords radiaux. La partie centrale de la pièce 75 est ondulée pour tenir compte de l'écartement croissant des voiles 38, 39 au fur et à mesure de l'usure des garnitures 45 du montage formant limiteur de couple. Bien entendu, si ce limiteur de couple n'existait pas, un seul voile serait nécessaire et les pièces 75 seraient alors fixées latéralement à ce voile. Selon l'exemple, où les pièces de matériau amortisseur sont intercalées entre les bras radiaux des deux voiles, chaque pièce 75 comporte deux trous 75a dans sa partie centrale, par lesquels elle est engagée sur deux colonnettes correspondantes 76 rivetées ou autrement fixées à l'un des voiles. Ces colonnettes coulissent librement dans des trous correspondants 77 de l'autre voile, pour permettre une certaine variation de l'écartement desdits voiles. Elles assurent en outre la mise en correspondance circonférentielle des bras radiaux 48 et leur maintien dans une bonne position relative pour une "attaque" correcte des socles. Comme le montre la figure 5, les colonnettes 76 sont fixées à un bras radial sur deux, pour chaque voile, les autres bras radiaux comportant des trous 77 en correspondance. Ceci permet de ne fabriquer qu'un seul type de voile, deux voiles identiques étant alors assemblés face à face en les décalant angulairement l'un par rapport à l'autre pour faire correspondre les colonnettes et les trous. La mise en correspondence circonférentielle des voiles forme l'objet de notre demande de brevet européen 87 401 804-7, du même date, publiée sous le numero EP-A 258 113. Dans cet exemple de réalisation, l'élément en matériau amortisseur 75 est propre à coopérer d'une part avec les facettes 80 et d'autre part avec la creusure 55 et est dimensionné en sorte qu'il vienne en contact avec lesdites facettes 80 ou creusure 55 avant que les extrémités 51 coopèrent avec le fond de la creusure 55. Bien entendu, la pièce 75 peut éventuellement déborder par rapport au bord des doigts 49 et présenter comme dans l'exemple précédent, des trous 72 pour faciliter l'effacement du matériau élastomère en vue d'un contact direct entre le fond de la creusure 55 et les doigts 49.

Le système qui vient d'être décrit en référence aux figures 1 à 5 permet une réduction importante des bruits transitoires qui peuvent survenir lorsque le moteur s'arrête. On remarquera en effet que l'engagement plus ou moins violent des doigts 49 dans les creusures 55 est amorti par le fait que le contact se fait d'abord latéralement avec la creusure par les parties de matériau amortisseur qui débordent de chaque côté des doigts et simultanément ou après par les parties de la même pièce qui débordent des bords sensiblement radiaux des bras 48 et qui viennent coopérer avec les facettes 80 jusqu'à contact direct entre le fond de la creusure 55 et les extrémités 51 des doigts 49. Par ailleurs, une remise en contact brutal des tourillons 25 des socles dans leurs encoches 26 est amortie par les bords des plaques de matériau amortisseur 68 qui débordent des fonds des encoches.

En revanche, il est possible de supprimer les plaques 68 et/ou les pièces 75 en modifiant les socles 24 conformément à ce qui est représenté aux figures 6 et 7. Comme cela apparaît plus clairement sur ces figures, les tourillons 25 comportent chacun une surface cylindrique venue de moulage et raccordée à une facette latérale plane 78. On peut donc faire en sorte que cette facette soit recouverte d'une couche de matériau amortisseur 79 s'étendant de part et d'autre du tourillon 25 correspondant. Les couches 79 peuvent donc, par exemple, être substituées aux plaques de matériau amortisseur 68. Elles peuvent aussi coexister avec ces plaques. De façon analogue, la creusure 55 s'ouvre sensiblement au milieu de la face arrière du socle 24 de sorte que des facettes 80 sont également définies de part et d'autre de l'ouverture de ladite creusure, ces facettes étant destinées à entrer en contact, après un certain pivotement des socles, avec les bords 50 des voiles. Selon une autre possibilité conforme à l'invention, chaque facette 80 peut être recouverte d'une couche de matériau amortisseur 81. Ces couches de matériau amortisseur peuvent se substituer aux éléments 75 mais les deux particularités peuvent également coexister. On peut également disposer du matériau amortisseur sur les talons 82.

Autrement dit, toutes les combinaisons entre l'un ou les deux systèmes d'amortissement décrits en référence aux figures 1 à 5 et l'un ou les systèmes d'amortissement décrits en référence aux figures 6 et 7, sont possibles.

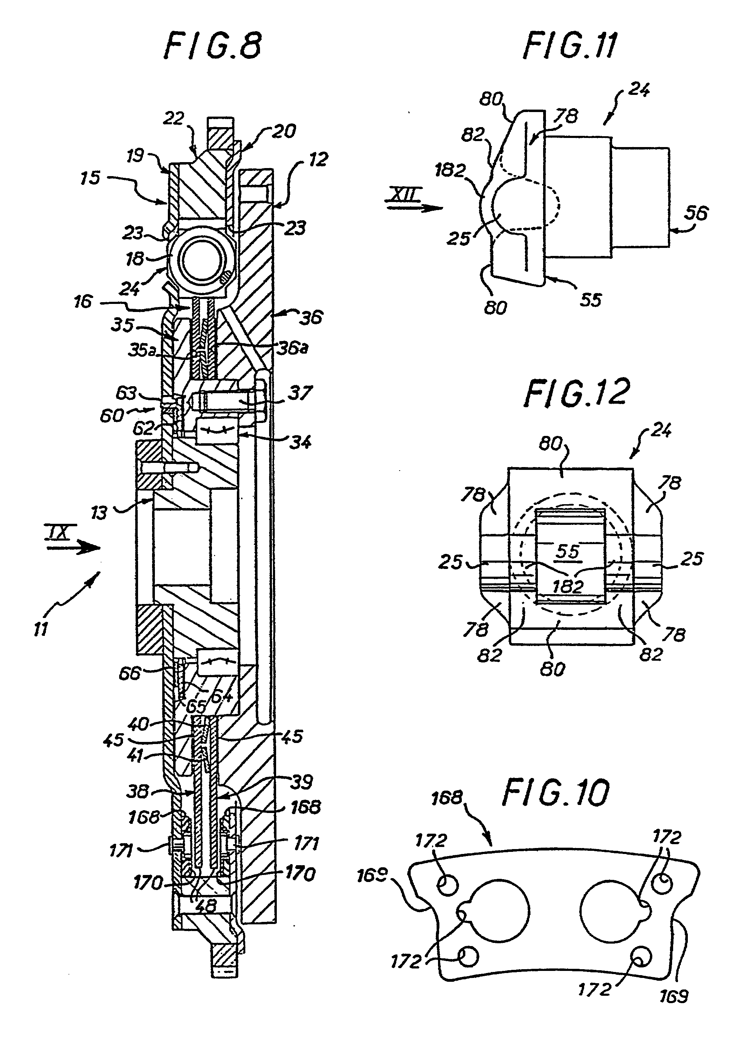

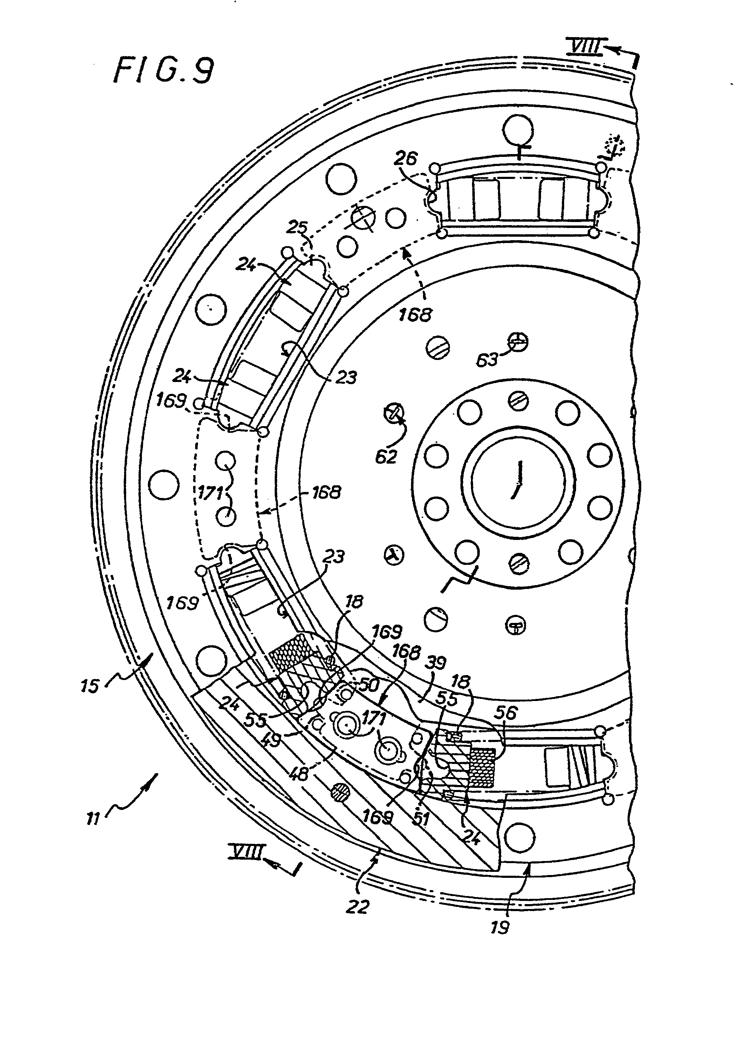

En se reportant aux figures 8 à 12 où les éléments de structure analogues à ceux des modes de réalisation précédents portent les mêmes références numériques, on a représenté plus particulièrement un volant d'inertie formant amortisseur de torsion 11, pour transmission de véhicule automobile, ce volant comportant une surface annulaire de contact 12 propre à lui faire jouer le rôle supplémentaire de plateau de réaction dans un embrayage à friction. A ce titre, le volant 11 est destiné à être fixé par son moyeu 13 au vilebrequin du moteur à combustion interne du véhicule automobile. Il comporte deux parties coaxiales 15 et 16, qui seront respectivement appelées ci-dessous première et seconde parties, montées avec possibilité de rotation limitée l'une par rapport à l'autre à l'encontre, notamment, de la force exercée circonférentiellement entre elles par des ressorts hélicoïdaux 18. La première partie 15 ou partie menante, dont fait partie le moyeu 13, comporte deux flasques annulaires 19, 20, métalliques, communément appelés "rondelles de guidage". Le flasque 19 est fixé au moyeu 13. Le flasque 20, parallèle au flasque 19 est fixé extérieurement à celui-ci avec interposition d'une entretoise annulaire massive 22 pourant la couronne de démarrage. Ces flasques comportent classiquement des fenêtres 23 allongées, s'étendant circonférentiellement. Chaque fenêtre d'un flasque est en regard d'une fenêtre symétrique de l'autre flasque de façon à définir des logements propres à abriter les ressorts 18. Chaque ressort 18 est monté dans un tel logement par l'intermédiaire de deux socles d'extrémité 24.

Dans l'exemple décrit, chaque socle comporte deux tourillons latéraux 25 admettant un axe commun parallèle à l'axe de rotation du volant amortisseur tandis que les fenêtres 23 comportent, sur leurs bords sensiblement radiaux, des encoches arrondies 26 recevant les tourillons 25 du socle correspondant. En pratique également, le centre de chaque extrémité du ressort 18 est positionné plus près de l'axe de rotation que le centre de rotation de la partie convexe 25 formant tourillon.

La seconde partie 16 est montée en rotation sur le moyeu 13 par un roulement à billes 34 et se compose d'une pièce annulaire 35, formant une sorte de moyeu et d'un plateau 36, fixé à la pièce annulaire 35 par des vis 37. Ce plateau constitue plus particulièrement le plateau de réaction de l'embrayage puisque sa face radiale externe forme la surface annulaire de contact 12 sur laquelle vient s'appliquer la friction d'embrayage (non représentée).

D'autre part, la pièce annulaire 35 et le plateau 36 comportent des portées annulaires radiales respectives, 35a, 36a parallèles tandis que deux voiles parallèles 38, 39, en tôle découpée, sont engagés dans l'espace défini par ces deux portées annulaires et repoussés axialement vers celles-ci, respectivement, par des moyens élastiques à action axiale, ici en l'occurrence deux rondelles Belleville 40, 41. Ici, la portée 35a est formée à la faveur d'une bride, s'étendant radialement en direction de l'entretoise 22, que possède la pièce 35 qui, par ailleurs, centre les voiles 38, 39. Chaque voile porte une garniture de friction annulaire 45 par laquelle il est en contact frottant avec la portée annulaire radiale correspondante. Les voiles intercalés axialement entre les deux flasques 19, 20 sont susceptibles de coopérer avec les socles 24 des ressorts (d'une façon qui sera décrite plus en détail ci-dessous) et l'agencement qui vient d'être décrit constitue un limiteur de couple autorisant un glissement rotatif entre lesdites première et seconde parties coaxiales, lorsque le couple transmis dépasse une valeur prédéterminée. Chaque voile 38, 39 comporte une partie annulaire plate portant les garnitures 45, prolongée vers l'extérieur par des bras radiaux 48 (autant que de ressorts) assujettis à se déplacer circonférentiellement entre les ressorts. Pour ce faire, chaque bras 48 est muni de deux doigts 49 opposés, s'étendant sensiblement suivant une direction circonférentielle et faisant respectivement saillie des deux bords sensiblement radiaux dudit bras. Chaque doigt 49 comporte une extrémité arrondie 51 susceptible d'entrer en contact pivotant avec le fond arrondi d'une creusure 55 du socle correspondant, ouvrant entre les deux tourillons précités. Les socles sont en matière plastique moulée mais portent des blocs de matériau élastomère 56 servant de butées élastiques en cas de surcouples aboutissant à une compression excessive des ressorts.

Bien entendu, la largeur de la creusure 55 est déterminée en fonction de l'écartement axial entre les voiles 38, 39 et compte tenu de l'usure des garnitures 54. Plus précisément, chaque socle 24 présente deux facettes latérales planes 78 pour coopération avec les flasques 19, 20. Par commodité, ces facettes latérales 78 seront appelées facettes de butée des flasques. En pratique, chaque tourillon 25 comporte une surface cylindrique venue de moulage et raccordée à la facette 78 correspondante. Chaque socle 24 présente également des facettes transversales 80 pour coopération avec les voiles 38, 39, par commodité ces facettes 80 seront appelées facettes de butée des voiles. En pratique, comme visible sur les figures, la creusure 55 s'ouvre sensiblement au milieu de la face arrière du socle 24, de sorte que ces facettes de butée des voiles sont définies de part et d'autre de ladite creusure 55. On notera que ces facettes 80 sont inclinées l'une par rapport à l'autre pour coopération avec les bords 50. En pratique, c'est la partie haute des voiles 38, 39 qui touche en premier l'une desdites facettes 80 pour débloquer le socle en service lorsque celui-ci occupe une position centrifugée. Entre lesdites facettes 80 d'une part, et les facettes 78 et les tourillons 25 d'autre part, sont définis, sur la face arrière du socle 24, des talons 82. L'écartement entre les deux talons correspond à la largeur de la creusure. La forme de ces talons est l'une des caractéristiques de l'invention et sera décrite plus loin. Comme visible sur les figures, chaque facette latérale 78 est raccordée à un talon 82 par une face perpendiculaire de guidage, propre à coopérer avec la face interne du flasque 19, 20 concerné.

Les ressorts n'interviennent pas dès le début du débattement angulaire entre les deux parties coaxiales, puisque les bras radiaux doivent effecteur une certaine course angulaire avant que certains de leurs doigts ne s'engagent dans les creusures des socles correspondants. Des moyens de frottement 60 (intervenant quant à eux dès le début du débattement angulaire entre les deux parties coaxiales) sont prévus entre lesdites parties coaxiales. Ces moyens de frottement se composent d'une rondelle de frottement 62 et d'une rondelle Belleville 66 formant ressort. La rondelle de frottement 62 est immobilisée en rotation par rapport à la première partie 15 par des pattes axiales 63 engagées dans des trous du flasque 19. Elle porte une garniture de friction 64 appliquée axialement contre un épaulement 65 de la pièce annulaire 35 de la seconde partie 16. La rondelle de frottement est sollicitée vers ledit épaulement par la rondelle Belleville 66 prenant appui entre celle-ci et le flasque 19.

Les flasques 19, 20 portent des éléments en matériau amortisseur, par exemple en matériau élastomère, caoutchouc ou analogue.

Dans l'exemple représenté ici, il s'agit de plaques de matériau amortisseur 168 fixées sur les faces internes des flasques en regard l'une de l'autre. Par commodité, on prévoit une même plaque 168 pour les bords sensiblement radiaux de deux fenêtres 23 adjacentes d'un même flasque. Ainsi, chaque plaque 168 s'étend entre deux fenêtres adjacentes d'un même flasque et est fixée à celui-ci par l'intermédiaire d'une contreplaque métallique 170 elle-même en retrait par rapport aux bords de la plaque de matériau amortisseur 168 qui sont voisins desdites encoches arrondies 26 de façon à ce que lesdites contreplaques métalliques 170 ne viennent pas en contact avec les socles 24. La contreplaque 170, maintenant la plaque 168, est fixée au flasque correspondant par deux rivets 171. Ceux-ci sont, selon l'exemple, situés dans les logements emboutis de ladite contreplaque. En pratique, l'épaisseur de la plaque est fonction de la largeur existante entre chaque flasque 19, 20 et les voiles 38, 39, en sorte que ladite plaque est propre à coopérer avec un talon 82 du socle 24. La largeur circonférentielle de la plaque est telle qu'elle vienne en contact avec le talon 82 du socle 24 avant que les tourillons 25 arrivent effectivement en contact avec les encoches 26. Pour faciliter l'effacement du matériau élastomère et pour permettre que les tourillons 25 arrivent effectivement en contact avec les bords des encoches 26, chaque plaque 168 est percée de trous 172 s'étendant en retrait des bords sensiblement radiaux de celle-ci. Selon l'exemple, ces trous ne sont qu'en nombre limité (trois) et de diamètre relativement important. L'un d'eux débouche dans le trou de fixation voisin de ladite plaque.

Les éléments en matériau amortisseur (c'est-à-dire les plaques 168) et les zones de la face arrière de chaque socle (c'est-à-dire les talons 82), qui sont susceptibles d'entrer mutuellement en contact, sont munis de découpes et reliefs coopérants, permettant de stabiliser radialement chaque socle par rapport aux flasques 19, 20, lors d'un déplacement relatif circonférentiel transitoire entre ledit socle et l'ensemble des deux flasques. Plus précisément, chaque relief précité consiste en une proéminence 182 à surface externe sensiblement cylindrique, faisant saillie de la face arrière du socle et plus précisément d'un talon 82 dudit socle. De cette façon, ladite surface cylindrique est sensiblement coaxiale à celle du tourillon 25 voisin. Par ailleurs, la découpe 169 que comporte chaque plaque 168 à chacune de ses extrémités, a la forme d'un arc de cercle, sensiblement complémentaire de la proéminence 182 correspondante.

Avec cet agencement, lors d'un mouvement circonférentiel de retour du socle vers les bords correspondants des flasques, la première zone de contact se crée entre les deux proéminences 182 et les tranches des découpes 169 correspondantes, ce qui assure un bon "guidage" circonférentiel, malgré la relative faiblesse des efforts exercés par le ressort 18 correspondant. Ce guidage est suffisant pour s'opposer à tout décalage du socle, radialement vers l'extérieur, sous l'effet de la force centrifuge.

## Revendications

1. Dispositif amortisseur de torsion, notamment dans un embrayage, du type comportant deux parties coaxiales (15, 16) montées avec possibilité de rotation limitée l'une par rapport à l'autre, une première partie comportant deux flasques (19, 20) annulaires sensiblement parallèles et une seconde partie comportant au moins un voile (38, 39) intercalé axialement entre les deux flasques et des ressorts (18) disposés sensiblement circonférentiellement entre des socles (24) montés sur l'une des parties, chaque socle comportant des premiers moyens d'engagement coopérant avec des moyens d'engagement complémentaires de l'une des parties pour définir entre eux au moins une première zone d'appui rotatif et des seconds moyens d'engagement coopérant avec des moyens d'engagement complémentaires de l'autre partie pour définir entre eux au moins une seconde zone d'appui rotatif, caractérisé en ce qu'au moins l'une desdites parties coaxiales et/ou lesdits socles sont pourvus ou forment des éléments en matériau amortisseur (68, 75, 79, 81) par exemple en matériau élastomère, caoutchouc ou analogue, interposés au moins au voisinage des moyens d'engagement précités, pour amortir les chocs entre lesdits socles et lesdites parties coaxiales.

2. Dispositif amortisseur selon la revendication 1, caractérisé en ce que les éléments amortisseurs (68, 75, 79, 81) précités sont placés à l'écart des zones d'appui rotatif précitées.

3. Dispositif amortisseur selon la revendication 1 ou 2, caractérisé en ce que des éléments en matériau amortisseur sont portés par les flasques (19, 20).

4. Dispositif amortisseur selon l'une des revendications 1 à 3, caractérisé en ce que des éléments en matériau amortisseur sont portés par les voiles (38,39).

5. Dispositif amortisseur selon l'une des revendications 1 à 4, caractérisé en ce que des éléments en matériau amortisseur sont portés par des socles (24).

6. Dispositif amortisseur selon l'une des revendications 3 à 5, caractérisé en ce que des éléments en matériau amortisseur sont rapportés sur les flasques et propres à coopérer avec les faces arrière desdits socles.

7. Dispositif amortisseur selon la revendication 6, du type dans lequel les deux flasques (19, 20) précités ou rondelles de guidage, comportent des fenêtres allongées agencées circonférentiellement, deux fenêtres en regard pratiquées respectivement dans les deux flasques abritant un ressort (18) et comportant sur leurs bords sensiblement radiaux des encoches arrondies (26) recevant des tourillons (25) définis sur un socle (24) correspondant, caractérisé en ce que des plaques de matériau amortisseur (68) sont fixées sur les faces internes desdits flasques, de manière à déborder circonférentiellement (69) par rapport aux fonds desdites encoches arrondies.

8. Dispositif amortisseur selon la revendication 7, caractérisé en ce que chaque plaque de matériau amortisseur s'étend entre deux bords sensiblement radiaux voisins des deux fenêtres adjacentes d'un même flasque et est fixée à celui-ci par l'intermédiaire d'une contreplaque métallique (70) en retrait par rapport aux bords de ladite plaque de matériau amortisseur (68) voisins desdites encoches arrondies.

9. Dispositif amortisseur selon l'une des revendications 7 ou 8, caractérisé en ce qu'une plaque en matériau amortisseur (68) est percée de trous (72) situés au voisinage de la ou des encoches correspondantes du flasque auquel elle est fixée.

10. Dispositif amortisseur selon l'une des revendications précédentes, caractérisé en ce que des éléments en matériau amortisseur (75) sont rapportés sur les voiles (38, 39) et sont propres à coopérer avec les faces arrière des socles.

11. Dispositif amortisseur selon la revendication 10, du type dans lequel le ou chaque voile (38, 39) précité comporte des bras radiaux (48) munis, chacun, de deux doigts (49) opposés s'étendant sensiblement suivant une direction circonférentielle, chaque doigt étant adapté à entrer en contact pivotant, par une extrémité arrondie, avec une creusure (55) à fond arrondi d'un socle précité, caractérisé en ce que des éléments en matériau amortisseur sont rapportés sur les voiles et propres à coopérer avec des creusures (55) de socles (24) correspondants.

12. Dispositif amortisseur selon la revendication 11, caractérisé en ce qu'au moins une pièce en matériau amortisseur relativement plate (75) est rapportée le long d'un bras radial et en ce qu'elle est conformée et disposée de manière à déborder par rapport au bords (49) desdits doigts, à l'exception de leurs extrémités arrondies et/ou par rapport aux bords sensiblement radiaux (50) de ce bras radial, de part et d'autre desdits doigts.

13. Dispositif amortisseur selon la revendication 12, comportant deux voiles (38, 39) parallèles entre lesquels sont disposés des moyens élastiques repoussant lesdits voiles en direction de portées respectives parallèles de ladite seconde partie, de préférence avec interposition de garnitures de friction (45), cet agencement constituant un limiteur de couple, caractérisé en ce que, pour chaque paire de bras radiaux appartenant respectivement aux deux voiles et placés en regard l'un de l'autre, une telle pièce de matériau amortisseur (75) est intercalée entre lesdits bras radiaux de cette paire.

14. Dispositif amortisseur selon la revendication 13, caractérisé en ce que chaque pièce de matériau amortisseur (75) a une forme correspondant sensiblement à celle d'un bras radial précité et en ce qu'elle comporte une partie centrale ondulée.

15. Dispositif amortisseur selon la revendication 14, caractérisé en ce que chaque pièce de matériau amortisseur comporte deux trous dans sa partie centrale et en ce qu'elle est engagée par ces deux trous sur deux colonnettes (76) reliant lesdits bras radiaux d'une paire précitée, ces colonnettes assurant en outre la mise en correspondance circonférentielle des bras radiaux des deux voiles.

16. Dispositif amortisseur selon la revendication 11, caractérisé en ce qu'une pièce de matériau amortisseur relativement plate est conformée et disposée de manière à déborder par rapport à l'extrémité arrondie des bords (49).

17. Dispositif amortisseur selon l'une des revendications précédentes, du type dans lequel chaque socle précité comporte deux tourillons (25) latéraux admettant un axe commun, adapté à coopérer avec des encoches (26) correspondantes pratiquées dans les flasques précités, chaque tourillon comportant une surface cylindrique venue de moulage et raccordée à une facette latérale (78), caractérisé en ce que ladite facette est recouverte d'une couche de matériau amortisseur (79) s'étendant de part et d'autre du tourillon correspondant.

18. Dispositif amortisseur selon l'une des revendications précédentes, du type dans lequel chaque socle précité comporte une creusure (55) ouvrant à l'opposé dudit ressort et adapté à recevoir au moins un doigt défini dans un voile (38, 39) précité et s'étendant sensiblement suivant une direction circonférentielle, caractérisé en ce que des facettes (80) s'étendant de part et d'autre de l'ouverture de la creusure (55) et destinées à entrer en contact avec des bords sensiblement radiaux dudit voile sont recouvertes d'une couche de matériau amortisseur (81).

19. Dispositif amortisseur selon l'une des revendications précédentes, caractérisé en ce qu'il constitue un volant d'inertie formant plateau de réaction d'un embrayage à friction.

20. Dispositif amortisseur de torsion selon l'une des revendications 3 ou 6, du type dans lequel deux flasques (19, 20) comportent des fenêtres allongées, agencées circonférentiellement, deux fenêtres en regard pratiquées respectivement dans les deux flasques abritant un ressort (18) monté avec précontrainte initiale entre deux socles (24), chaque fenêtre comportant sur ses bords sensiblement radiaux des encoches arrondies (26) recevant des tourillons (25) définis sur des socles (24) correspondants, caractérisé en ce que les éléments en matériau amortisseur (168) et les zones (82) de la face arrière de chaque socle qui sont susceptibles d'entrer mutuellement en contact, sont munis de découpes (169) et reliefs (182) coopérant pour stabiliser radialement ledit socle par rapport auxdits flasques, lors d'un déplacement relatif circonférentiel entre ceux-ci.

21. Dispositif amortisseur de torsion selon la revendication 20, caractérisé en ce que chaque relief de chaque socle consiste en une proéminence (182) à surface externe sensiblement cylindrique, faisant saillie de la face arrière dudit socle, ladite surface sensiblement cylindrique étant coaxiale à celle d'un tourillon (25) correspondant et jouxtant ce dernier, tandis que chaque élément en matériau amortisseur est muni d'une découpe (169) de forme sensiblement complémentaire de ladite proéminence.

**Patentansprüche**

1. Torsionsdämpfeinrichtung, insbesondere für eine Kupplung, von der Art, die zwei koaxiale Teile (15, 16) aufweist, welche mit der Möglichkeit zur begrenzten Drehung im Verhältnis zueinander angebracht sind, wobei ein erster Teil zwei ringförmige und im wesentlichen parallel verlaufende Flansche (19, 20) und ein zweiter Teil wenigstens eine Abdeckung (38, 39) enthält, die axial zwischen den beiden Flanschen eingesetzt ist, sowie Federn (18), die im wesentlichen am Umfang zwischen Sockeln (24) angeordnet sind, die an einem der Teile vorgesehen sind, wobei jeder Sockel erste Eingriffsmittel besitzt, die mit entsprechenden Eingriffsmitteln an einem der Teile zusammenwirken, so daß dazwischen wenigstens eine erste Dreh-Auflagezone entsteht, sowie zweite Eingriffsmittel, die mit entsprechenden Eingriffsmitteln am anderen Teil zusammenwirken, so daß dazwischen wenigstens eine zweite Dreh-Auflagezone entsteht, dadurch gekennzeichnet, daß wenigstens einer der genannten koaxialen Teile und/oder der genannten Sockel mit Elementen (68, 75, 79, 81) versehen sind oder solche Elemente bilden, die aus einem dämpfenden Material gefertigt sind, z.B. aus Elastomer, Gummi oder einem ähnlichen Material, und die wenigstens in Nähe der vorgenannten Eingriffsmittel eingesetzt sind, um die Stöße zwischen den genannten Sockeln und den genannten koaxialen Teilen zu dämpfen.

2. Dämpfeinrichtung nach Anspruch 1, dadurch gekennzeichnet, daß die vorgenannten Dämpfelemente (68, 75, 79, 81) in einem Abstand von den vorgenannten Dreh-Auflagezonen angeordnet sind.

3. Dämpfeinrichtung nach Anspruch 1 oder 2, dadurch gekennzeichnet, daß Elemente aus dämpfendem Material auf den Flanschen (19, 20) aufliegen.

4. Dämpfeinrichtung nach einem der Ansprüche 1 bis 3, dadurch gekennzeichnet, daß Elemente aus dämpfendem Material auf den Abdeckungen (38, 39) aufliegen.

5. Dämpfeinrichtung nach einem der Ansprüche 1 bis 4, dadurch gekennzeichnet, daß Elemente aus dämpfendem Material auf Sockeln (24) aufliegen.

6. Dämpfeinrichtung nach einem der Ansprüche 3 bis 5, dadurch gekennzeichnet, daß Elemente aus dämpfendem Material an den Flanschen befestigt und zum Zusammenwirken mit den Rückseiten der genannten Sockel geeignet sind.

7. Dämpfeinrichtung nach Anspruch 6 von der Art, bei der die beiden vorgenannten Flansche (19, 20) oder Führungsscheiben längliche Fenster aufweisen, die am Umfang angebracht sind, wobei zwei einander gegenüberliegende Fenster in den beiden Flanschen zur Aufnahme einer Feder (18) angeordnet sind und an ihren im wesentlichen radialen Kanten abgerundete Einschnitte (26) zur Aufnahme der Drehzapfen (25) aufweisen, die an einem entsprechenden Sockel (24) begrenzt werden, dadurch gekennzeichnet, daß Platten aus dämpfendem Material (68) an den Innenflächen der genannten Flansche in der Weise befestigt sind, daß sie am Umfang (69) im Verhältnis zu den Böden der genannten abgerundeten Einschnitte überstehen.

8. Dämpfeinrichtung nach Anspruch 7, dadurch gekennzeichnet, daß jede Platte aus dämpfendem Material zwischen zwei im wesentlichen radialen Kanten in Nähe der zwei an einen Flansch angrenzenden Fenster liegt und daran mit Hilfe einer Metall-Gegenplatte (70) befestigt ist, und zwar im Verhältnis zu den Kanten der genannten Platte aus dämpfendem Material (68), die an die genannten abgerundeten Einschnitte angrenzen, nach hinten versetzt.

9. Dämpfeinrichtung nach einem der Ansprüche 7 oder 8, dadurch gekennzeichnet, daß eine Platte aus dämpfendem Material (68) Löcher (72) aufweist, die in Nähe des entsprechenden Einschnitts oder der entsprechenden Einschnitte des Flanschs, woran sie befestigt ist, angeordnet sind.

10. Dämpfeinrichtung nach einem der vorherigen Ansprüche, dadurch gekennzeichnet, daß Elemente aus dämpfendem Material (75) an den Abdeckungen (38, 39) angebracht und zum Zusammenwirken mit den Rückseiten der Sockel geeignet sind.

11. Dämpfeinrichtung nach Anspruch 10, von der Art, bei der die vorgenannte Abdeckung (38, 39) jeweils radiale Arme (48) aufweist, die jeweils mit zwei Zapfen (49) versehen sind, die einander gegenüber liegen und sich im wesentlichen in Umfangsrichtung erstrecken, wobei jeder Zapfen dazu geeignet ist, mit einem abgerundeten Ende mit einer Aushöhlung (55) mit abgerundetem Boden am vorgenannten Sockel in Drehkontakt zu treten, dadurch gekennzeichnet, daß die Elemente aus dämpfendem Material an den Abdeckungen befestigt und zum Zusammenwirken mit Aushöhlungen (55) der entsprechenden Sockel (24) geeignet sind.

12. Dämpfeinrichtung nach Anspruch 11, dadurch gekennzeichnet, daß entlang eines radialen Arms wenigstens ein relativ flaches Stück aus dämpfendem Material (75) vorgesehen und so ausgebildet und angeordnet ist, daß es im Verhältnis zu den Kanten (49) der genannten Zapfen, mit Ausnahme der abgerundeten Enden, und/oder im Verhältnis zu den im wesentlichen radialen Kanten (50) dieses radialen Arms beiderseits der genannten Zapfen übersteht.

13. Dämpfeinrichtung nach Anspruch 12 mit zwei parallel angeordneten Abdeckungen (38, 39), zwischen denen elastische Mittel angeordnet sind, die die genannten Abdeckungen in Richtung entsprechender Flächen drücken, die parallel zum genannten zweiten Teil verlaufen, vorzugsweise unter Einfügung von Reibbelägen (45), wobei diese Anordnung einen Drehmomentbegrenzer bildet, dadurch gekennzeichnet, daß für jedes Paar radialer Arme, die jeweils zu den beiden Abdeckungen gehören und einander gegenüber angeordnet sind, ein solches Stück aus dämpfendem Material (75) zwischen den genannten radialen Armen dieses Paars eingesetzt ist.

14. Dämpfeinrichtung nach Anspruch 13, dadurch gekennzeichnet, daß jedes Stück aus dämpfendem Material (75) eine Form aufweist, die im wesentlichen der eines vorgenannten radialen Arms entspricht, und daß es einen gewellten Mittelteil enthält.

15. Dämpfeinrichtung nach Anspruch 14, dadurch gekennzeichnet, daß jedes Stück aus dämpfendem Material im mittleren Teil zwei Löcher aufweist und daß es mittels dieser beiden Löcher mit zwei Säulchen (76) in Eingriff steht, die die genannten radialen Arme eines der vorgenannten Paare miteinander verbinden und außerdem die Umfangsangleichung der radialen Arme der beiden Abdeckungen gewährleisten.

16. Dämpfeinrichtung nach Anspruch 11, dadurch gekennzeichnet, daß ein relativ flaches aus dämpfendem Material so ausgebildet und angeordnet ist, daß es im Verhältnis zum abgerundeten Ende der Kanten (49) übersteht.

17. Dämpfeinrichtung nach einem der vorherigen Ansprüche, von der Art, bei der jeder der vorgenannten Sockel zwei seitliche Drehzapfen (25) aufweist, die eine gemeinsame Achse ermöglichen, welche zum Zusammenwirken mit entsprechenden Einschnitten (26) in den vorgenannten Flanschen geeignet ist, wobei jeder Drehzapfen eine zylindrische Oberfläche aufweist, die aus einem Guß mit einer seitlichen Fase (78) verbunden ist, dadurch gekennzeichnet, daß die genannte Fase mit einer Schicht dämpfenden Materials (79) abgedeckt ist, die sich beiderseits des entsprechenden Drehzapfens erstreckt.

18. Dämpfeinrichtung nach einem der vorherigen Ansprüche, von der Art, bei der jeder vorgenannte Sockel eine Öffnung (55) aufweist, die sich entgegen der genannten Feder öffnet und dazu geeignet ist, wenigstens einen Zapfen aufzunehmen, der in einer vorgenannten Abdeckung (38, 39) begrenzt ist und sich im wesentlichen in einer Umfangsrichtung erstreckt, dadurch gekennzeichnet, daß Fasen (80), die sich beiderseits der Öffnung der Aushöhlung (55) erstrecken und dazu bestimmt sind, mit im wesentlichen radialen Kanten der genannten Abdeckung in Kontakt zu treten, mit einer Schicht aus dämpfenden Material (81) versehen sind.

19. Dämpfeinrichtung nach einem der vorherigen Ansprüche, dadurch gekennzeichnet, daß sie ein Schwungrad bildet, welches als Gegendruckplatte einer Reibungskupplung dient.

20. Torsionsdämpfeinrichtung nach einem der Ansprüche 3 oder 6, von der Art, bei der zwei Flansche (19, 20) längliche Fenster aufweisen, die am Umfang angebracht sind, wobei zwei Fenster, die in den beiden Flanschen einander gegenüber angebracht sind, eine Feder (18) aufnehmen, die zwischen zwei Sockeln (24) mit Vorspannung eingebaut ist, wobei jedes Fenster an seinen im wesentlichen radialen Kanten abgerundete Einschnitte (26) zur Aufnahme von Drehzapfen (25) aufweist, die an entsprechenden Sockeln (24) vorgesehen sind, dadurch gekennzeichnet, daß die Elemente aus dämpfendem Material (168) und die Zonen (82) der Rückseite jedes Sockels, die in gegenseitigen Kontakt treten können, mit Ausschnitten (169) und Erhöhungen (182) versehen sind, die zusammenwirken, um bei einer relativen Umfangsverschiebung zwischen den Flanschen den genannten Sockel radial im Verhältnis zu den Flanschen zu stabilisieren.

21. Torsionsdämpfeinrichtung nach Anspruch 20, dadurch gekennzeichnet, daß jede Erhöhung jedes Sockels aus einem Vorsprung (182) mit im wesentlichen zylindrischer Außenfläche besteht, der an der Rückseite des genannten Sockels übersteht, wobei die genannte im wesentlichen zylindrische Fläche koaxial zu der Oberfläche eines entsprechenden und daran angrenzenden Drehzapfens (25) verläuft, während jedes Element aus dämpfendem Material mit einem Ausschnitt (169) versehen ist, dessen Form den genannten Vorsprung im wesentlichen ergänzt.

## Claims

1. A torsion-damping device, particularly for a clutch, of the kind comprising two coaxial parts (15, 16) mounted with the possibility of a limited degree of rotation relative to each other, a first part comprising two substantially parallel annular flanges (19, 20) and a second part comprising at least one plate (38, 39) disposed axially between the two flanges, and springs (18) disposed substantially circumferentially between pedestals (24) mounted on one of the parts, each pedestal comprising first engagement means cooperating with complementary engagement means on one of the parts to define between them at least one first rotary bearing zone, and second engagement means cooperating with complementary engagement means on the other part to define between them at least one second rotary bearing zone, characterized in that at least one of the said coaxial parts and/or the said pedestals is provided with or forms elements made of damping material (68, 75, 79, 81), for example of elastomeric material, caoutchouc or the like, disposed at least in the vicinity of the aforementioned engagement means, for damping impacts between the said pedestals and the said coaxial parts.

2. A torsion-damping device according to Claim 1, characterized in that the aforementioned damping elements (68, 75, 79, 81) are spaced from the aforementioned rotary bearing zones.

3. A torsion-damping device according to Claim 1 or 2, characterized in that elements made of damping material are carried by the flanges (19, 20).

4. A torsion-damping device according to one of Claims 1 to 3, characterized in that elements made of damping material are carried by the plates (38, 39).

5. A torsion-damping device according to one of Claims 1 to 4, characterized in that elements made of damping material are carried by the pedestals (24).

6. A torsion-damping device according to one of Claims 3 to 5, characterized in that elements made of damping material are carried by the flanges and are designed to interact with the war faces of the said pedestals.

7. A torsion-damping device according to Claim 6, of the kind in which the two aforementioned flanges (19, 20), or guide washers, comprise elongated slots arranged circumferentially, two facing slots made respectively in the two flanges accommodating a spring (18) and comprising in their substantially radial edges rounded notches (26) which receive journal members (25) defined on a corresponding pedestal (24), characterized in that plates of damping material (68) are fastened on the inner faces of the said flanges so as to project circumferentially (69) relative to the bottoms of the said rounded notches.

8. A torsion-damping device according to Claim 7, characterized in that each plate of damping material extends between two adjacent substantially radial edges of two adjacent slots in the same flange and is fastened to the flange by means of a metal backplate (70) set back relative to the edges of the said plate of damping material (68) which are adjacent to the said rounded notches.

9. A torsion-damping device according to one of Claims 7 or 8, characterized in that one plate of damping material (68) is perforated with holes (72) located near the corresponding notch or notches in the flange to which it is fastened.

10. A torsion-damping device according to one of the preceding Claims, characterized in that the elements made of damping material (75) are attached to the plates (38, 39) and are designed to interact with the rear faces of the pedestals.

11. A torsion-damping device according to Claim 10 of the kind in which the or each aforementioned plate (38, 39) comprises two radial arms (48) each equipped with two opposing fingers (49) extending substantially circumferentially, each finger being adapted to enter into pivoting contact, by means of a rounded end, with a recess (55), having a rounded bottom, made in one of the said pedestals, characterized in that the elements made of damping material are attached to the plates and are adapted to cooperate with the recesses (55) of the corresponding pedestals (24).

12. A torsion-damping device according to Claim 11, characterized in that at least one relatively flat piece of damping material (75) is attached along a radial arm, and in that it is shaped and arranged so as to project relative to the edges (49) of the said fingers, except for their rounded ends, and/or relative to the substantially radial edges (50) of the radial arm, on either side of the said fingers.

13. A torsion-damping device according to Claim 12 comprising two parallel plates (38, 39) between which elastic means are disposed which push the said plates towards respective parallel bearing surfaces on the said second part, preferably with friction facings (45) interposed between them, this arrangement constituting a torque limiter, characterized in that in the case of each pair of radial arm forming part respectively of the two plates and situated facing one another, such a piece of damping material (75) is placed between the said radial arms of this pair.

14. A torsion-damping device according to Claim 13, characterized in that each piece of damping material (75) has a shape corresponding substantially to that of an aforementioned radial ann, and in that it comprises a corrugated central portion.

15. A torsion-damping device according to Claim 14, characterized in that each piece of damping material comprises two holes in its central portion and in that it is engaged by means of these two holes on two small columns (76) connecting the said radial arms of an aforementioned pair, these small columns also ensuring that the radial arms of the two plates are made to correspond circumferentially.

16. A torsion-damping device according to Claim 11, characterized in that a relatively flat piece of damping material is shaped and arranged so as to project beyond the rounded end of the edges (49).

17. A torsion-damping device according to one of the preceding Claims of the kind in which each aforementioned pedestal comprises two lateral journals (25) having a common axis and adapted to cooperate with corresponding notches (26) made in the aforementioned flanges, each journal having a cylindrical surface, derived from moulding, attached to a lateral facet (79), characterized in that the said facet is covered with a layer of damping material (79) extending on both sides of the corresponding journal.

18. A torsion-damping device according to one of the preceding Claims of the kind in which each aforementioned pedestal comprises a recess (55) opening out circumferentially away from the said spring and designed to receive at least one finger defined in an aforementioned plate (38, 39) and extending substantially circumferentially, characterized in that facets (80) extending on both sides of the opening of the recess (55) and adapted to come into contact with substantially radial edges of the said plate are covered with a layer of damping material (81).

19. A torsion-damping device according to one of the preceding Claims, characterized in that it constitutes an inertia flywheel forming a reaction plate of a friction clutch.

20. A torsion-damping device according to one of Claims 3 or 6 of the kind in which two flanges (19, 20) comprise elongated slots arranged circumferentially, two facing slots made respectively in the two flanges accomodating a spring (18) mounted with an initial preload between two pedestals (24), and each slot comprising in its substantially radial edges rounded notches (26) which receive journals (25) defined on corresponding pedestals (24), characterized in that the elements made of damping material (168) and the zones (82) of the rear face of each pedestal which can come into contact with one another are provided with cut out portions (169) and reliefs (182) which cooperate to stabilize the said pedestal radially relative to the said flanges during relative circumferential movement between them.

21. A torsion-damping device according to Claim 20, characterized in that each relief of each pedestal consists of a protrusion (182) having a substantially cylindrical outer surface projecting from the rear face of the said pedestal, the said substantially cylindrical surface being coaxial with that of a corresponding journal (25) and being located next to the latter, whilst each element made of damping material is provided with a cut out portion (169) having a shape substantially complementary to the said protrusion.

# FIG.1

# FIG.5

EP 0 258 112 B1

FIG. 2

FIG. 3

FIG. 4

FIG. 6

FIG. 7

**FIG.8**

**FIG.11**

**FIG.12**

**FIG.10**

FIG.9